# EUROPEAN PATENT SPECIFICATION

(11) **EP 3 632 014 B1**
(45) Date of publication and mention of the grant of the patent: **13.12.2023**
(21) Application number: 17735071.7
(22) Date of filing: 28.06.2017
(51) Int. Cl.: H04L 1/00, H04L 1/1829, H04L 5/00, H04L 5/14

(54) **SYSTEMS AND METHODS FOR WIRELESS TRANSMISSION OF BI-DIRECTIONAL TRAFFIC**
SYSTEME UND VERFAHREN ZUR DRAHTLOSEN ÜBERTRAGUNG VON BIDIREKTIONALEM VERKEHR
SYSTÈMES ET PROCÉDÉS DE TRANSMISSION SANS FIL DE TRAFIC BIDIRECTIONNEL

(43) Date of publication of application: 08.04.2020
(73) Proprietor: Huawei Technologies Co., Ltd., Longgang District Shenzhen, Guangdong 518129 (CN)
(72) Inventor: HENCINSKI, Oren, 80992 Munich (DE); LIANG, Haixiang, 80992 Munich (DE); LV, Jie, 80992 Munich (DE)
(74) Representative: MERH-IP Matias Erny Reichl Hoffmann Patentanwälte PartG mbB
(86) International application number: PCT/EP2017/065945
(87) International publication number: WO 2019/001695

(56) References cited:
- US-A1- 2009 154 356
- US-A1- 2011 211 523
- US-A1- 2011 243 070
- US-A1- 2014 169 261
- US-A1- 2015 117 467

## Description

### BACKGROUND

The present invention, in some embodiments thereof, relates to wireless networks and, more specifically, but not exclusively, to systems and methods for transmission of data over a distributed wireless network.

Wireless computer networks, such as wireless local area networks (WLAN) are deployed in areas such as offices, homes, shopping centers, and schools. The wireless networks provide wireless communication services to mobile devices such as smartphones, tablets, and watch computers, and wireless communication services to stationary computing devices such as desktop personal computers, Smart TV, and set top boxes.

New systems and methods are sought to meet the growing demand for bandwidth by applications running on the wireless network connected client terminals.

US 2011/243070 A1 discloses various examples relating to wireless networks, such as relay networks or multi-hop networks, and also relating to control signaling techniques for wireless networks. In an example, a method or technique may include transmitting (e.g., data or control) frames in a downlink direction and control frames in an uplink direction during a first phase, and transmitting (e.g., data or control) frames in an uplink direction and control frames in a downlink direction during a second phase.

US 2011/211523 A1 provides a method for transmitting acknowledgement (ACK)/non-acknowledgement (NACK) in a wireless communication system employing a relay station. The method includes receiving data, and transmitting an ACK/NACK for the data according to a specific rule when the ACK/NACK cannot be transmitted in the synchronous ACK/NACK transmission rule. Thereby, it is possible to solve a problem caused by ACK/NACK transmission between a base station and a relay station.

US 2014/169261 A1 anticipates a system and a method for enabling flexible and reliable UE-to-UE based relay. The embodiments include using fountain codes for combining signals at a suitable network layer higher than a media access control (MAC) sub-layer and using a MAC sub-layer hybrid automatic repeat request (HARQ) transmission scheme. When a relay UE in a UE group for joint reception receives, from a network access point, a data packet intended for a destination UE in the UE group and including fountain code at the higher network layer, the relay UE sends the data packet to the destination UE and returns a HARQ ACK message at the MAC sub-layer to the access point. The destination UE then receives and decodes the data packet. Subsequently, upon receiving the entire data, the destination UE sends an ACK message at the higher network layer to the access point.

US 2009/154356 A1 discloses a method of sending data units from a sending node to a receiving node via at least one intermediate node, where: the data units are arranged in a sequence and each data unit is associated with a sequence position identifier; the intermediate node forwards received data units towards the receiving node and sends feedback messages towards the sending node, where in case of a correct receipt of a given data unit at said intermediate node, a corresponding feedback message comprises a first type receive information that indicates said correct receipt at said intermediate node; the receiving node sends feedback messages towards the sending node, where in case of a correct receipt of a given data unit at said receiving node, a corresponding feedback message comprises a second type receive information that indicates said correct receipt at said receiving node; the intermediate node forwards said second type of receipt information towards said sending node and conducts a data unit retransmission procedure in dependence on received receive information; and the sending node conducts a data unit retransmission procedure in dependence on received receipt information of the first and second type, and conducts a data unit flow control procedure for controlling an amount of data that can be sent at a given time in dependence on said first and second type receipt information.

US 2015/117467 A1 provides a method carried out by a network device comprising a plurality of network adapters for transmitting and/or receiving data through a first group of network adapters. Each network adapter of the first group of network adapters is capable of using a plurality of communication technologies for transmitting and/or receiving data. The each network adapter is configured to use a corresponding communication technology for transmitting and/or receiving data. The each network adapter is configured by a configuration corresponding to each network adapter.

### SUMMARY

It is an object of the present invention to provide an apparatus and a method for transmission of data encapsulated in a bi-directional network transmission protocol over a distributed wireless network.

The foregoing and other objects are achieved by the features of the independent claims. Further implementation forms are apparent from the dependent claims, the description and the figures. The invention is defined by the appended claims.

In a first aspect, an apparatus according to claim 1 is provided.

The term "direct" in particular denotes bridging and/or routing of a packet.

In a second aspect, a method according to claim 6 is provided.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic denoting 802.11 MAC overheads, useful for helping to understand the technical problem addressed by some embodiments of the present invention;
FIG. 2 is a schematic depicting dataflow based on the 802.11 reverse direction grant (RDG), useful for helping to understand the technical problem addressed by some embodiments of the present invention;
FIG. 3 is a block diagram of components of a system, which includes at least one computing device for transmission of data encapsulated in a bi-directional network transmission protocol over a distributed wireless network, in accordance with some embodiments of the present invention;
FIG. 4 is a flowchart of a method of transmitting of data encapsulated in a bi-directional network transmission protocol over a distributed wireless network, in accordance with some embodiments of the present invention;
FIG. 5 is a schematic depicting a distributed wireless network transmitting encapsulated data by a first transmitter, and encapsulated acknowledgement messages transmitted by a second transmitter, between a last repeater providing wireless communication services to a client terminal, and an AP via multiple repeaters, in accordance with some embodiments of the present invention;
FIG. 6 is a schematic graphically depicting an exemplary implementation of the transmission of TCP DATA packets over a distributed wireless network by a first transmitter transmitting at 5 GHz, and transmission of TCP ACK messages by a second transmitter at 2.4 GHz, in accordance with some embodiments of the present invention;
FIG. 7 is a schematic graphically depicting an exemplary implementation of a distributed wireless network 714 implementing the transmission of TCP ACK packet direction from a last repeater providing communication services to a client terminal, to AP, in accordance with some embodiments of the present invention;
FIG. 8 is a schematic graphically depicting an exemplary implementation of a distributed wireless network implementing a VLAN for transmission of TCP DATA packets by a first transmitter at a first frequency, and transmission of TCP ACK packets by a second transmitter at a second frequency, in accordance with some embodiments of the present invention; and
FIG. 9 includes graphs demonstrating band bonding improvement for transmission of data encapsulated in a bi-directional network transmission protocol over a distributed wireless network, in accordance with some embodiments of the present invention.

### DETAILED DESCRIPTION

The present invention, in some embodiments thereof, relates to wireless networks and, more specifically, but not exclusively, to systems and methods for transmission of data over a distributed wireless network.

As used herein, the term *bi-directional network transmission protocol* means a network transmission protocol that is designed to operate by transmission of data in two directions, from a sender to a receiver, and from the receiver back to the sender. An exemplary bi-directional network transmission protocol includes the Transmission Control Protocol/Internet Protocol (TCP/IP). TCP DATA packets are transmitted in one direction (e.g., downlink), and TCP ACK packets are transmitted in the opposite direction (e.g., uplink).

An aspect of some embodiments of the present invention relates to an apparatus, a system, a method, and/or code instructions for directing data encapsulated in a bi-directional network transmission protocol (e.g., DATA packets based on the TCP/IP protocol ) for transmission over a distributed wireless network by a first wireless transmitter at a first frequency, and directing acknowledgement messages of the bi-directional network transmission protocol generated in response to reception of the data (e.g., TCP ACK packets) for transmission by a second wireless transmitter at a second frequency.

The apparatus, system, method, and/or code instructions described herein may be implemented as one or more radio node repeaters that transmit between a client terminal and an access point (AP) in communication with a network core.

Optionally, the data encapsulated in a bi-directional network transmission protocol is transmitted by the first wireless transmitter at the first frequency in a downlink direction from the AP to the client terminal. The acknowledgement messages are transmitted by the second wireless transmitter at the second frequency in an uplink direction, from the last repeater providing wireless communication services to the client terminal, towards the AP.

Optionally, in an environment of two or more repeaters (e.g., in a chained and/or meshed network architecture), providing wireless communication services between the client terminal and the AP, the acknowledgement messages are transmitter directly from the last repeater providing wireless communication services to the client terminal, and the AP. The intermediate repeaters do not participate in routing and/or relaying the acknowledgement messages between the last repeater and the AP.

The apparatus, systems, methods, and/or code instructions described herein provide full-duplex wireless data communication over the distributed wireless network, in comparison to other standard methods that provide half-duplex wireless data communication. The apparatus, systems, methods, and/or code instructions described herein operating in full-duplex mode transport data encapsulated in a bi-directional network transmission protocol more efficiency over a distributed wireless network in comparison to half-duplex based wireless networking protocols.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Wireless data networking protocols, for example, IEEE 802.11 WLAN, are designed to operate in half-duplex mode, and/or are not designed for optimal transport of bi-directional traffic over a wireless network. For example, IEEE 802.11 WLAN most commonly operates in Contention Period (CP) mode, which is an un-scheduled mode, in which each member of the WLAN basic service set (BSS) tries to win the medium access based on the carrier-sense multiple access with collision avoidance (CSMA\CA) method. IEEE 802.11 WLAN is a half-duplex protocol. The access point (AP) may either transmit to a BSS client or several clients in multi-user multiple-input multip-output (MLT-MIMO), or in 802.11ax orthogonal frequency-division multiple access (OFDMA) mode. The AP may be in receive mode receiving the client uplink traffic, or several clients uplink in MLT-MIMO, or in 802.11ax OFDMA mode.

Operating a network transmission protocol (e.g., TCP/IP) designed for bi-directional operation in half-duplex mode over a distributed wireless network reduces the efficiency of the data transfer. For example, the TCP ACK packet length is less than 64 bytes. The typical ratio between TCP ACK packets and TCP DATA packets varies for example, from 1:2 (e.g., slow start) to 1:6 (e.g., high throughput). For example, for a 300 megabits per second (Mbps) downlink traffic, the maximum transmission unit (MTU) size is 1500 bytes, or 25 000 packets per second (pps). For a TCP ACK ratio of 1:6 the frame per second (fps) rate is 4166, or about 4 frames per millisecond (mSec). Assuming TCP ACK frame length of 64 byes * 4166 fps = 2.13 Mbps. 802.11 media access control (MAC) efficiency is based on a constant MAC overhead per transmission of about 207 microseconds (uSec). As the PHY rate increases, the wireless network throughput utilization decreases. For example, for a 1536 byte frame, with aggregated MAC protocol data unit (A-MPDU) size 16 frames, in an optimal environment of a single station (STA), the following exemplary utilizations are obtained:
* MCS9 1 stream at 40 Megahertz (MHz) with a short guardian interval (GI) of 200 Megabits per second (Mbps) translates to 160 Mbps which is equal to about 80% Utilization.
* MCS9 1 stream at 80 MHz with a short GI of 433.3 Mbps translates to 290 Mbps which is equal to about 68% Utilization.
* MCS9 3 stream at 80 MHz a short GI of 1.3 Gigabits per second (Gbps) translates to 520 Mbps which is equal to about 40% Utilization.

Although the TCP ACK traffic may be considered as negligible, being about 2-4 Mbps versus the 300 Mbps downlink traffic (about 1.3%), based on the above discussed considerations such as half-duplex CSMA\CA based protocol and very low 802.11MAC efficiency for low throughput at high PHY rate, in practice the 1.3% ratio of uplink/downlink decreases the downlink traffic by 10-20%. The downlink traffic utilization is further decreased for 300 Mbps rates of a distributed wireless network (e.g., Wi-Fi system) that includes multiple repeaters.

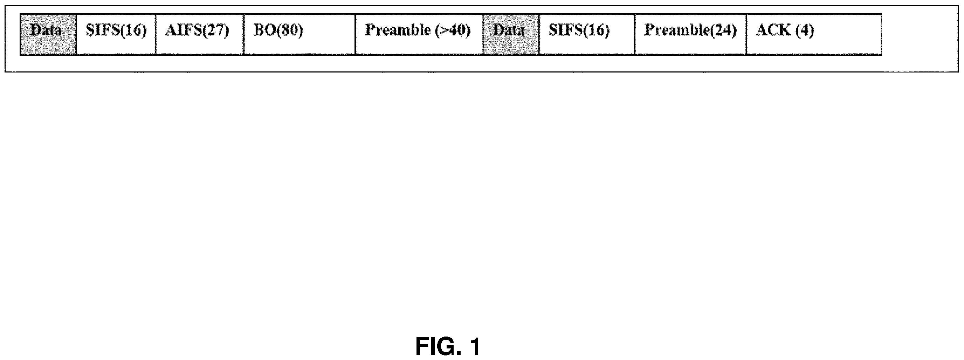

Reference is now made to FIG. 1, which is a schematic denoting 802.11 MAC overheads, useful for helping to understand the technical problem addressed by some embodiments of the present invention.

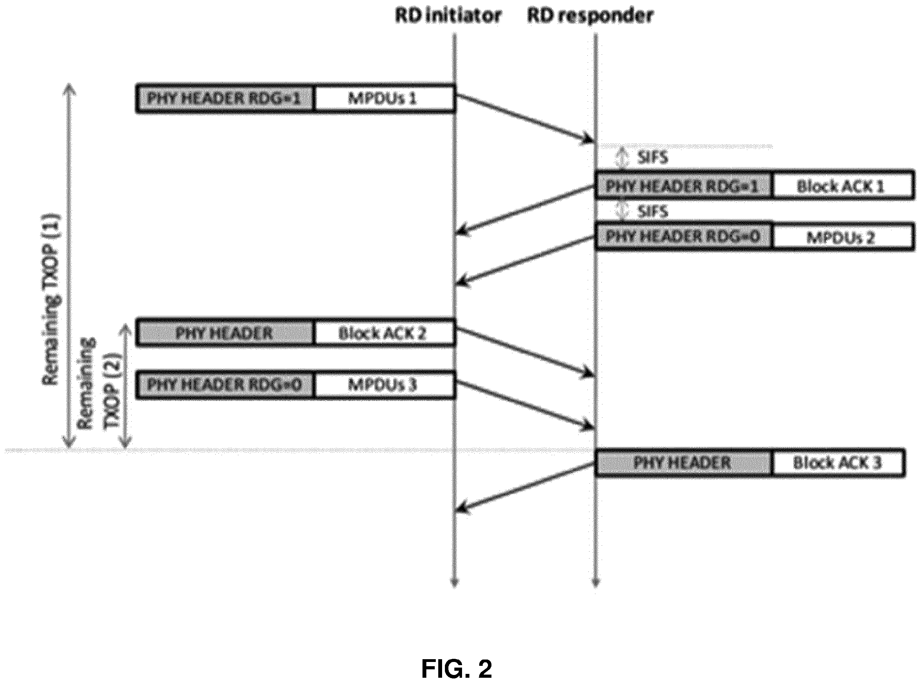

Reference is now made to FIG. 2, which is a schematic depicting dataflow based on the 802.11 reverse direction grant (RDG) protocol, useful for helping to understand the technical problem addressed by some embodiments of the present invention. The RDG method is designed to enable an AP to grant the transmission (Tx) to the client terminal as part of the AP transmission opportunity (TxOP) without the need to perform the CSMA\CA. The RDG mechanism appears to reduce delay in the reverse link traffic and increase link efficiency, since the reverse direction data packets do not need to wait in the queue until the station holds a TxOP, but may be transmitted immediately when the RD responder is allocated for the remaining TxOP.

In comparison to the RDG mechanism, the systems, methods, apparatus, and/or methods described herein provide:
* Full-duplex operation, in contrast to the half-duplex operation of the RDG method.
* An improvement in the vulnerability of the downlink channel to uplink retries, in contrast to the RDG method that does not provide such improvement.
* Is transparent to the operation of the client terminal and the AP, and therefore do not require adjustment of wireless (e.g., Wi-Fi) networking hardware (e.g., protocol support, hardware adjustment, software installation), in contrast to the RDG method which requires support by wireless networking hardware chip vendors for implementation at the client terminal and AP.

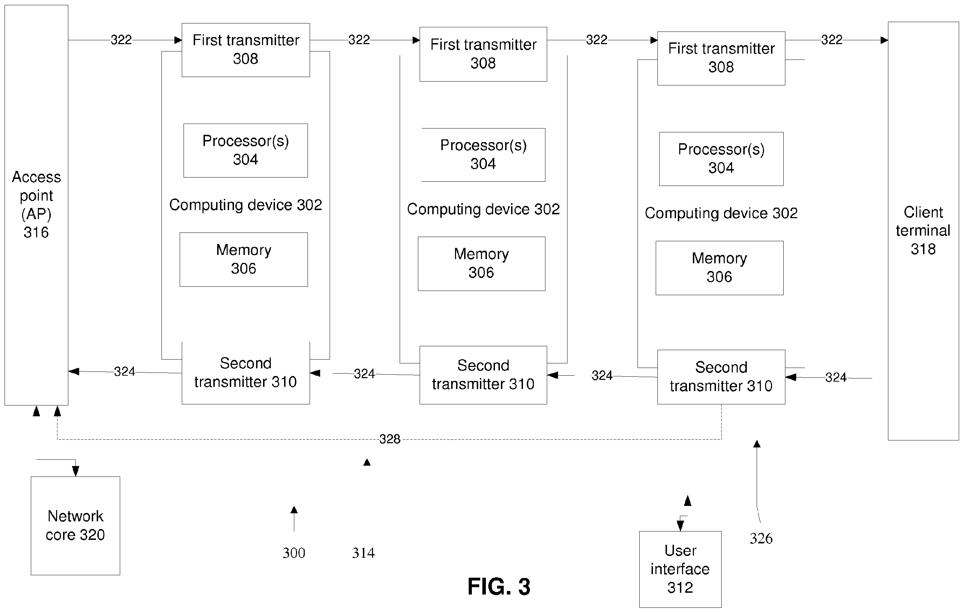

Reference is now made to FIG. 3, which is a block diagram of components of a system 300, which includes at least one computing device 302 for transmission of data encapsulated in a bi-directional network transmission protocol over a distributed wireless network 304, in accordance with some embodiments of the present invention.

Each computing device 302 may be implemented as a wireless repeater, and/or radio node, that receives a wireless signal and rebroadcasts the signal.

Each computing device 302 includes one or more processors 304 that execute code instructions stored in a memory 306. Processor(s) 304 may include hardware implementations of the code instructions. Processor(s) 304 direct received data encapsulated in the bi-directional network transmission protocol for transmission by a first wireless transmitter 308 at a first frequency, and direct received acknowledgement messages of the bi-directional network transmission protocol generated in response to reception of the data, for transmission by a second wireless transmitter 310 at a second frequency.

The first frequency at which first transmitter 308 operates is based on the 5 Gigahertz (GHz) band radio channel. The second frequency at which second transmitter 310 operates is based on the 2.4 GHz band radio channel. The 5 GHz wide band (e.g., up to 160 MHz) is designed for backhauling at high speed, and therefore is suitable to transmit the bulk of the data, for example, transmission of the TCP DATA packets. The lower frequency 2.4 GHz band radio channel is better suited for wide local coverage in comparison to the 5 GHz band, and may be used to directly transmit the acknowledgement message from the last repeater (that provides the wireless communication services to the client terminal) to the AP. The 2.4 GHz band provides ultra-low latency and low path loss characteristics for the transmission of the acknowledgment messages. The 2.4 GHz narrow band (e.g., 20 MHz) designed for low bandwidth is sufficient for transport of the acknowledgement messages, for example, the TCP ACK packets.

First transmitter 308 and second transmitter 310 transmit concurrently. Concurrent transmission by two radios provides full-duplex operation of the wireless network.

First transmitter 308 and second transmitter 310 may be implemented as separate components, for example, two antennas, or two sets of antennas. The separate component design provides for concurrent transmission.

For clarity and simplicity of explanation, the transmission functions of computing device 302 are described. It is understood that each computing device 304 may perform both transmitter and receiver functions. Each computing device 302 includes first transmitter 308 for transmission at the first frequency, and second transmitter 310 for transmission at the second frequency. Each transmitter 308 and 310 may act as a receiver, optionally implemented a transceiver. Alternatively, the receiver is implemented as another component of computing device 302. Transmitters 308 and 310 are implemented as one or more antennas arranged according to a selected wireless communication architecture and/or modulation scheme.

Computing device 302 may be implemented as, for example, a wireless repeater, a radio node, a wireless router, another wireless access point, and a client terminal performing repeater and/or relay functions (e.g., stationary device, mobile device, smartphone, tablet computer, desktop computer, and server). Computing device 302 may be implemented as, for example, a standalone unit, software installed on an existing device (e.g., existing repeater and/or client terminal) and/or a hardware card or other component attached or inserted into the existing equipment.

Each computing device 302 includes a respective processor(s) 304, which may be implemented as, for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators. Processor(s) 304 include one or more processors (homogenous or heterogeneous), which may be arranged for parallel processing, as clusters and/or as one or more multi core processing units.

Each computing device 302 includes a respective memory 306 that stores code instructions executed by processor(s) 304. It is noted that processor(s) 304 may be designed to implement in hardware one or more features stored as code instructions. Memory 306 may be implemented as, for example, a hard drive, a random access memory (RAM), read-only memory (ROM), an optical drive, and/or other storage devices.

Computing devices 302 may include or be in communication with a respective physical user interface 312 that includes a mechanism for entering data and/or display (and/or hear) data, for example, one or more of: a touch-screen, a display, a keyboard, a mouse, voice activated software, and a microphone. It is noted that computing devices 302 may be remotely controlled and/or remotely configured, for example, by an administration computing device via a wired and/or wireless connection. In such a case, user interface 312 may be in communication with the remote administration computing device.

Computing devices 302 are arranged in distributed wireless network architecture 314, providing wireless communication services between an access point(s) (AP) 316 and a client terminal(s) 318. Distributed wireless network 314 includes one or more computing devices 302, for example, to increase coverage of wireless services to client terminals 318 accessing AP 316. Three computing devices 302 are shown for example purposes only, as a typical deployment includes three or four repeaters to provide coverage over a typical area (e.g., home, school, office), however architectures with one, two, or more than three computing devices 302 may be implemented. Each computing device 302 transmits to another computing device 302 (e.g., when acting as a repeater in a chain and/or mesh architecture) and/or transmits to client terminal(s) 318.

Optionally, distributed wireless network 314 is based on the IEEE 802.11 standard.

Optionally, distributed wireless network 314 includes a wireless mesh network, in which multiple computing device 302 are arranged based on a mesh architecture, providing services to one or more client terminals 318.

Access point 316 may be implemented as a standalone component, for example, a wire based access point connecting to the core network using a wired connection (e.g., when in communication with and/or including computing device 302), a wireless access point (WAP), a radio access network (RAN), and a base station) of a wireless network.

AP 316 is in communication with a network core 320, for example, the internet, a private network, a wireless cellular network, and a landline telephone network. Network core 320 includes one or more network components, for example, servers, routers, one or more networks, and client terminals.

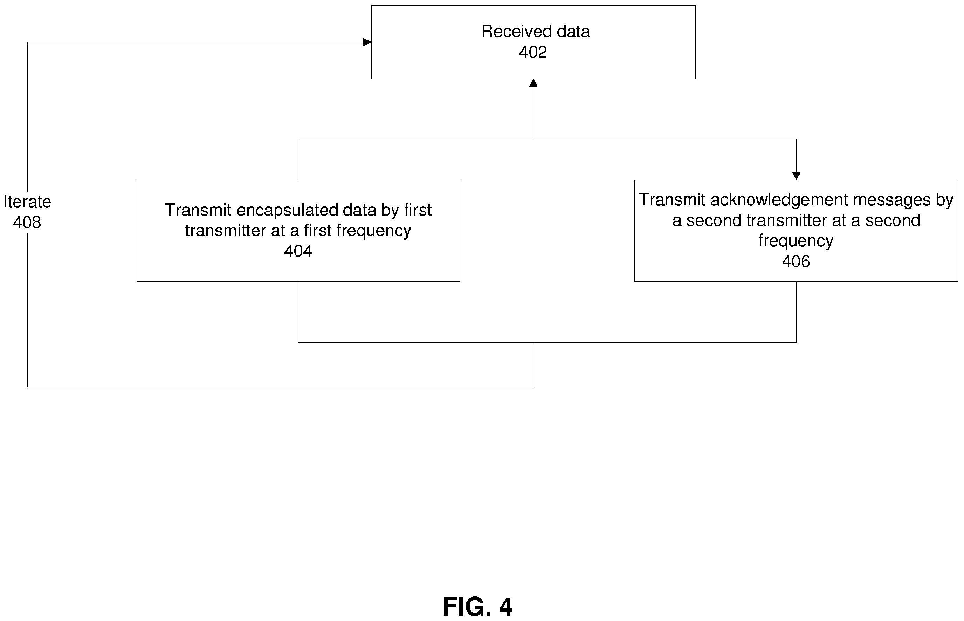

Reference is now made to FIG. 4, which is a flowchart of a method of transmitting data encapsulated in a bi-directional network transmission protocol over a distributed wireless network, in accordance with some embodiments of the present invention. System 300 described with reference to FIG. 3 may implement the acts of the method described with reference to FIG. 4. The method described with reference to FIG. 4 denotes the operation of one computing device 302 of system 300.

At 402, data is received by a wireless receiver of computing device 302. The data may be received from AP 316 designated for transmission to client terminal 318 (directly or via another computing device), and/or the data may be received from client terminal 318 designated for transmission to AP 316 (directly or via another computing device), and/or the data may be received from another computing device 302 designated for transmission to another computing device 302, to client terminal 318, and/or to AP 316.

The received data includes data encapsulated in the bi-directional network transmission protocol and/or acknowledgement messages of the bi-directional network transmission protocol generated in response to reception of the data.

When two receivers are implemented (e.g., as separate components), the encapsulated data and/or the acknowledgement message may be received concurrently.

At 404, processor(s) 304 of computing device 302 directs the received data encapsulated in the bi-directional network transmission protocol for transmission by first wireless transmitter 308 at the first frequency.

Optionally, the data encapsulated in the bi-directional network transmission protocol is transmitted by first wireless transmitter 308 at the first frequency in a downlink direction (denoted by arrows 322) from network core 320 towards client terminal 318.

The downlink direction is expected to transmit significant more data than the uplink direction, for example, streaming video and other application data from the network core to the client terminal.

At 406, processor(s) 304 of computing device 302 directs the received acknowledgement messages of the bi-directional network transmission protocol generated in response to reception of the data for transmission by second wireless transmitter 310 at the second frequency.

Optionally, the acknowledgement messages are transmitted by second wireless transmitter 310 at the second frequency in an uplink direction (denoted by arrows 324) from a last repeater (i.e., computing device 302) providing wireless communication services to the client terminal 318 (last repeater denoted by 326) towards network core 320.

Optionally, the bi-directional network transmission protocol is implemented as a transmission control protocol (TCP). The encapsulated includes TCP DATA packets, and the acknowledgement messages include TCP ACK packets. The systems, apparatus, methods, and/or code instructions described provide TCP fast ramp-up, for example, from ACK frequency of 1:2 to 1:6, and fast recovery from errors, which improves transmission of video applications.

Optionally, the TCP ACK packets are defined as a voice access category (AC) based on the Wi-Fi-Multimedia (WMM) standard, and the TCP ACK packets are defined as single media access control protocol data unit (MPDU) without aggregation. Defining the TCP ACK packets as a voice access category (AC) based on the Wi-Fi-Multimedia (WMM) standard and single MPDU further improves transmission efficiency of the acknowledgement message in comparison to A-MPDU implementation.

Optionally, the acknowledge messages are transmitted directly between the last repeater (i.e., computing device 302 denoted by 326) providing wireless communication service client terminal 318 and access point 316, as denoted by arrow 328. Alternatively or additionally, acknowledgement messages are transmitted directly from client terminal 318 to AP 316, when client terminal 318 includes suitable transmission hardware and/or code instructions. The acknowledgement messages are not relayed and/or routed by the other computing devices. It is noted that the data encapsulated in the bi-directional network transmission protocol is transmitted by each wireless repeater (i.e., computing devices 302) implementing the wireless channel between client terminal 318 and network access point 316.

The acknowledgement messages may be transmitted at a lower frequency than the transmission frequency of the encapsulated data. The lower frequency provides a relatively larger range than the higher frequency, providing for the direct transmission from the client terminal and/or last repeater (that provides services to the client terminal) to the network access point.

Transmitting the acknowledgement messages directly from the last repeater (that provides wireless communication services to the client terminal) to the network access point avoids the additional delay and/or jitter that would otherwise be introduced by routing of additional repeaters. For example, TCP flow control is determined according to the calculated end to end (E2E) round trip time (RTT).

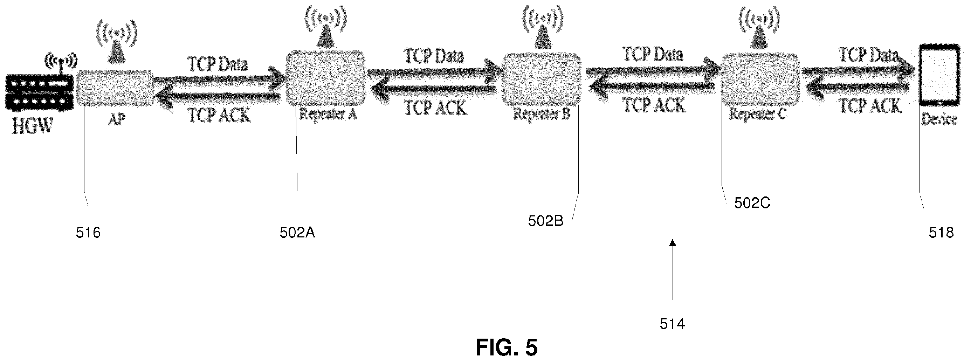

Reference is now made to FIG. 5, which is a schematic depicting a distributed wireless network 514 transmitting encapsulated data by a first transmitter, and encapsulated acknowledgement messages transmitted by a second transmitter, between a last repeater 502C providing wireless communication services to a client terminal 518, and an AP 516 via multiple repeaters 502A-B, in accordance with some embodiments of the present invention. Distributed wireless network 514 may implemented as described with reference to system 300 of FIG. 3, and/or operate based on the method described with reference to FIG. 4. The RTT is computed as the sum of the downlink time and the uplink time. The downlink time is based on the TCP data path defined as: (AP 516 to Repeater A 502A) + (Repeater A 502A to Repeater B 502B) + (Repeater B 502B to Repeater C 502C) to (Repeater C 502C to client terminal 518). The uplink time is based on the TCP ACK path defined as: (client terminal 518 to Repeater C 502C) + (Repeater C 502C to Repeater B 502B) + (Repeater B 502B to Repeater A 502A) + (Repeater A 502A to AP 516). By transmitting the TCK ACK packets directly from Repeater C 502C to AP 516, the path (Repeater C 502C to Repeater B 502B) + (Repeater B 502B to Repeater A 502A) + (Repeater A 502A to AP 516) is avoided, reducing the uplink time.

Transmitting the acknowledgement messages directly from the single repeater to the network access point reduces the TCP RTT in comparison to standard methods that perform of ACK TCP packets based on hops between additional repeaters. The increase in RTT time and/or additional jitter that would otherwise be introduced by each additional node hop is avoided by the direct transmission of the acknowledgement messages from the last repeated to the network access point, providing increased efficiency and increased end to end throughput in comparison to standard methods based on multiple repeater hops.

The direct transmission decreases the TCP RTT by a factor of tens of mSec (e.g., 41 mSec versus 11 mSec). TCP ACK robustness is increased. Each wireless (e.g., Wi-Fi) backhaul transmission increases the collision and packet probability. Limiting TCP ACK transmission to the single direct transmission enhances the link robustness. In particular, when the acknowledgement messages are transmitted at 2.4 GHz, there is about a 7 decibel (dB) gain in comparison to transmission at 5GHz. Moreover, the 20 MHz band of the 2.5 GHz transmission adds 6 dB in comparison to the 80 MHz of the 5 GHz transmission.

TCP ACK Tx time is about 250 - 300microsecnds (µSec), including about 200 µSec of wireless network (e.g., Wi-Fi) overhead + about 50-80 µSec of data symbols. Although the backhaul link uses VHT 3SS at 80 MHz, each repeater hop adds about a 200 µSec delay. Direct transmission from the last repeater to the AP at 20 MHz at low MCS incurs only the symbols transmission time while saving the majority of the multi hop overhead. Exemplary coverage obtained by different parameter values include:
* 5GHz, 80MHZ, MCS 7, 3SS: produces coverage of about 8 meters (m).
* 2.4GHz, 80MHZ, MCS 7, 3SS: produces coverage of about 13m.
* 2.4GHz, 20MHz, MCS3, 1SS: produces coverage of about 84m.

Referring now back to act 406 of FIG. 4, the most recent acknowledgement message is transmitted and older acknowledgement message(s) are dropped by computing device 302 when multiple acknowledgement messages are buffered. Dropping the older acknowledgement message(s) further improves efficiency of transmission of the acknowledgement messages by reducing the total number of transmitted message(s). The older acknowledge message(s) may be ignored and replaced with the most recent acknowledgement message.

Optionally, acts 402, 404, and 406 are implemented according to virtual local area network (VLAN) architecture. The VLAN may be configured on AP 316 and/or computing devices 302. Data received from an external network (e.g., network core 320) is routed and encapsulated in the bi-directional network transmission protocol to a first virtual local area network VLAN. The acknowledgement messages transmitted by the second wireless transmitter from a second VLAN are extracted and routed to the external network. The systems, apparatus, methods, and/or code instructions described herein may be implemented on existing equipment based on the exemplary VLAN described herein.

It is noted that acts 404 and 406 are executed concurrently.

At 408, acts 402, 404, and/or 406 are iterated.

Various embodiments and aspects of the present invention as delineated hereinabove and as claimed in the claims section below find calculated support in the following examples.

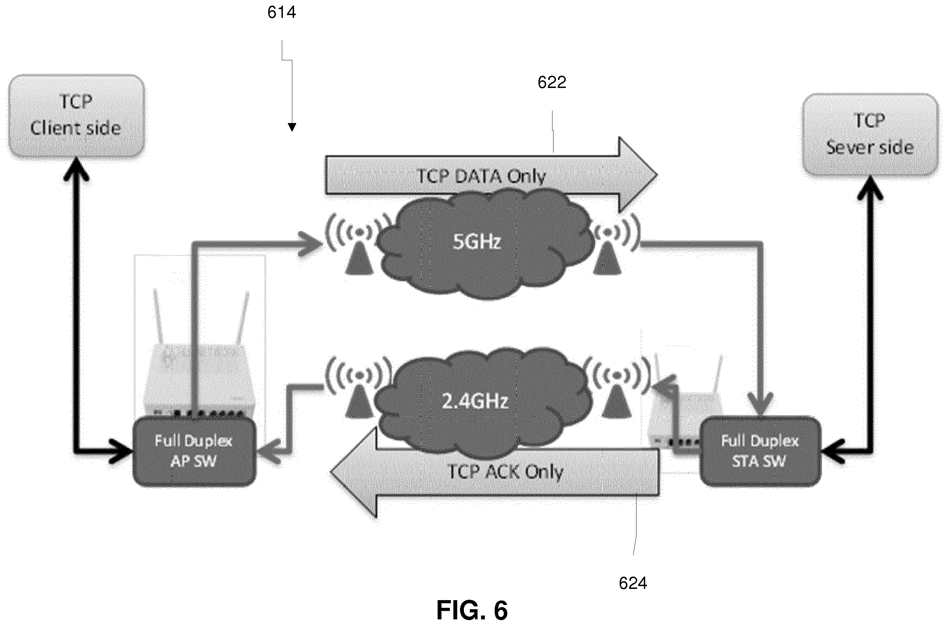

Reference is now made to FIG. 6, which is a schematic graphically depicting an exemplary implementation of the transmission of TCP DATA packets 622 over a distributed wireless network 614 by a first transmitter transmitting at 5 GHz, and transmission of TCP ACK messages 624 by a second transmitter at 2.4 GHz, in accordance with some embodiments of the present invention.

The full duplex architecture described herein saves up to a 20 milliseconds (milSec) in the TCP RTT for each repeater. TCP ACK may wait at max for DL TxOP (10 milSec). TCP DATA may wait at max for DL TxOP (10 milSec). Both AP and the client terminal may safely use the whole TxOP period without causing addition delay at the reverse side. The decoupling is removed between the download and the upload. Overall, TCP throughput is increased by about 10-15%.

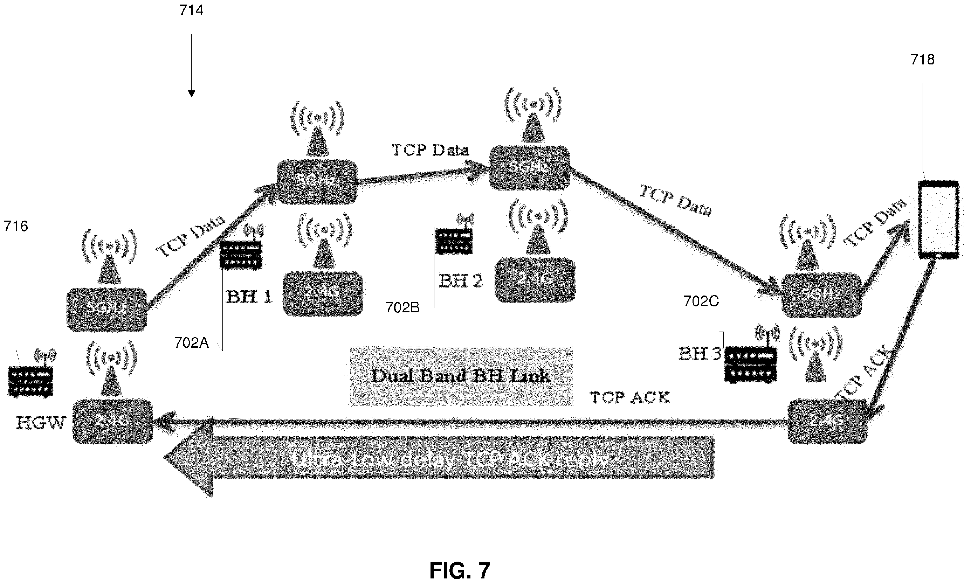

Reference is now made to FIG. 7, which is a schematic graphically depicting an exemplary implementation of a distributed wireless network 714 implementing the transmission of TCP ACK packet direction from a last repeater 702C providing communication services to a client terminal 718, to AP 716, in accordance with some embodiments of the present invention. TCP ACK packets are not transmitted by intermediate repeaters 702A-B. It is noted that TCP DATA packets are transmitted from AP 716 to client terminal 718 via repeaters 702A-C.

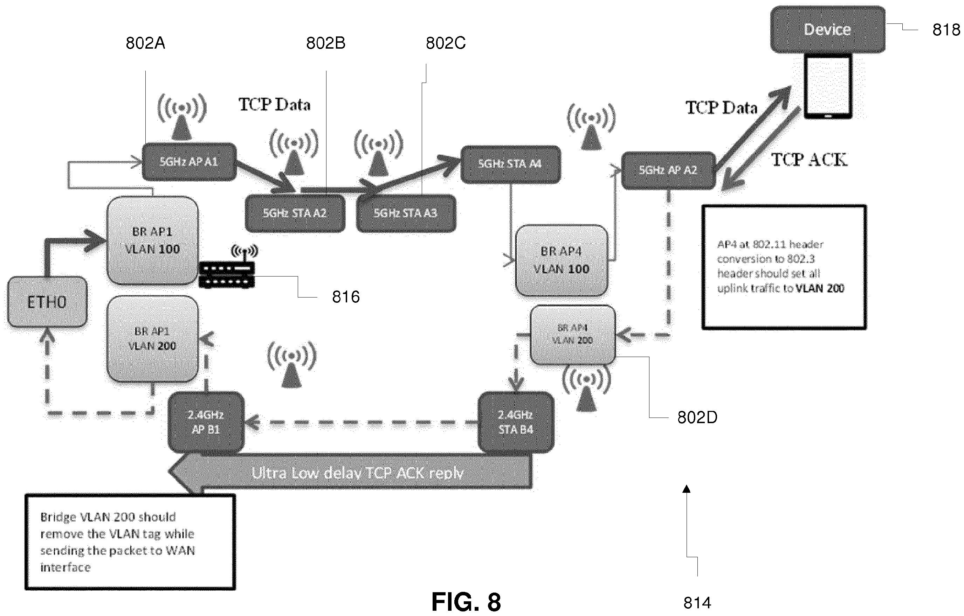

Reference is now made to FIG. 8, which is a schematic graphically depicting an exemplary implementation of a distributed wireless network 818 implementing a VLAN for transmission of TCP DATA packets by a first transmitter at a first frequency, and transmission of TCP ACK packets by a second transmitter at a second frequency, in accordance with some embodiments of the present invention.

The network core (e.g., wide area network (WAN)) ingress and egress traffic is external to the implemented VLAN. AP 816 sets downlink TCP DATA packets with a VLAN A tag (e.g., 100). Last repeater 802D providing wireless communication services to a client terminal 818 marks TCP ACK packets on the uplink traffic with a VLAN B tag (e.g., 200). Each repeater 802A-C is configured (e.g., the Linux bridge is set) to route the traffic according to the VLAN tag as follows:
- Route VLAN 100 to 5GHz BH AP
- Route VLAN 200 to 2.4GHz BH STA

### EXAMPLES

Reference is now made to the following examples, which together with the above descriptions illustrate some embodiments of the systems, apparatus, methods, and/or code instructions described herein in a non limiting fashion.

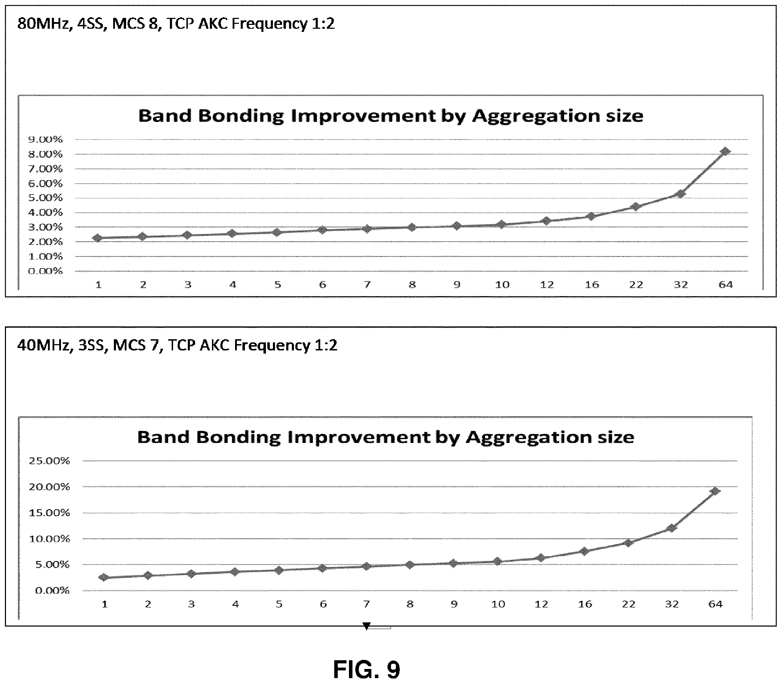

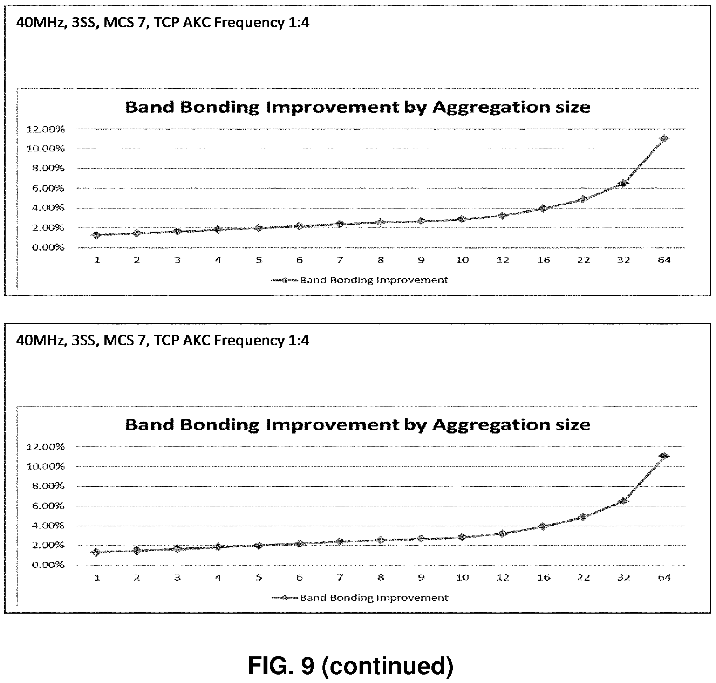

Reference is now made to FIG. 9, which includes graphs demonstrating band bonding improvement for transmission of data encapsulated in a bi-directional network transmission protocol over a distributed wireless network, in accordance with some embodiments of the present invention. Graphs are computed for different parameters of the distributed wireless network.

The improvement ratio is computed as the ratio between transmitting the TCP DATA and ACK packets solely on the 5GHz channel versus optimizing the traffic over the band bonding backhaul link, as described herein. The X axis denotes the aggregation size (i.e., number of frames per aggregation). The Y axis denotes the performance improvement. The graphs depict that as the aggregation size increases, the gain increases. The higher the throughput, the higher the gain.

As the TCP ACK frequency decreases (i.e., fewer TCP ACK packets per TCP DATA packets), the efficiency of the band bonding (i.e., transmitting the encapsulated data by the first transmitter at the first frequency and transmitting the acknowledgement packets by the second transmitter at the second frequency) decreases. However, the band bonding enables TCP fast ramp-up, from ACK frequency of 1:2 to 1:6, and fast recovery from errors, which improves transmission of video applications.

The following table depicts computation results of a delay analysis of multiple repeater hops. The single hop computations are based on TCP ACK packet size of 64 bytes, for which the Tx time is computed as follows:
* 80 MHZ, MCS 7, 3SS = 278.5µSec (RTS\CTS), 154.5µSec (no protection)
* 20 MHz, MCS3, 1SS = 306.5µSec (RTS\CTS), 166.5µSec (no protection)
The multiple hop delays are computed are computed based on a pure Tx time. The per hop TCK ACK Tx might suffer from TxOP delay of about 10 mSec.

| # of Hops | Multi Hop Tx with RTS\CTS | Multi Hop Tx no protection | Multi Hop | Direct link | Direct Link | Direct Link |
|---|---|---|---|---|---|---|
| | | | TxOP Delay | Tx RTS\CTS | Tx No Protection | TxOP Delay |
| 1 | 278.5 µSec | 154.5µSec | Up to 10mSec | 306.5 µSec | 166.5 µSec | Up to 10mSec |
| 2 | 556 µSec | 309 µSec | Up to 20mSec | 306.5 µSec | 166.5 µSec | Up to 10mSec |
| 3 | 835.5 µSec | 463.5 µSec | Up to 30mSec | 306.5 µSec | 166.5 µSec | Up to 10mSec |
| 4 | 1114 µSec | 618 µSec | Up to 40mSec | 306.5 µSec | 166.5 µSec | Up to 10mSec |

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant wireless networks will be developed and the scope of the term wireless network is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

To the extent that section headings are used, they should not be construed as necessarily limiting.

## Claims

1. An apparatus (302) for transmission of data encapsulated in a bi-directional network transmission protocol over a distributed wireless network (314), the apparatus (302) comprising a processor (304), a first wireless transmitter (308) and a second wireless transmitter (310), wherein
the processor (304) is configured to:
direct the data encapsulated in the bi-directional network transmission protocol for transmission by the first wireless transmitter (308) at a first frequency; and
direct acknowledgement messages of the bi-directional network transmission protocol generated in response to reception of the data, for transmission by the second wireless transmitter (310) at a second frequency,
wherein the data encapsulated in the bi-directional network transmission protocol is transmitted by each wireless repeater (302) implementing a wireless channel between a client terminal (318) and a network access point (316), and the acknowledgement messages are transmitted directly between the client terminal (318) and the network access point (316), wherein the processor (304) is configured to transmit the most recent acknowledgement message and drop at least one older acknowledgement message when a plurality of acknowledgement messages are buffered,
wherein the first wireless transmitter (308) and the second wireless transmitter (310) transmit concurrently.

2. The apparatus (302) according to any of the previous claims, wherein the distributed wireless network (314) is based on the IEEE 802.11 standard.

3. The apparatus (302) according to any of the previous claims, wherein the bi-directional network transmission protocol comprises a transmission control protocol, TCP, the data transmitted in the downlink includes TCP DATA packets, and the acknowledgement messages transmitted in the uplink include TCP ACK packets.

4. The apparatus (302) according to any of the previous claims, wherein the first frequency is based on the 5 Gigahertz, GHz, band radio channel, and the second frequency is based on the 2.4 GHz band radio channel.

5. The apparatus (302) according to any of the previous claims, wherein the processor (304) is further configured to route data received from an external network (320) and encapsulated in the bi-directional network transmission protocol to a first virtual local area network VLAN, and to extract the acknowledgement messages transmitted by the second wireless transmitter (310) from a second VLAN and route the extracted acknowledgement messages to the external network (320).

6. A method of transmission of data encapsulated in a bi-directional network transmission protocol over a distributed wireless network, wherein the method is performed by an apparatus (302) comprising a processor (304), a first wireless transmitter (308) as well as a second wireless transmitter (310) and wherein the method comprises:
directing the data encapsulated in the bi-directional network transmission protocol for transmission by the first wireless transmitter (308) at a first frequency (404); and
directing acknowledgement messages of the bi-directional network transmission protocol generated in response to reception of the data (406) for transmission by the second wireless transmitter (310) at a second frequency,
wherein the data encapsulated in the bi-directional network transmission protocol is transmitted by each wireless repeater (302) implementing a wireless channel between a client terminal (318) and a network access point (316), and the acknowledgement messages are transmitted directly between the client terminal (318) and the network access point (316), wherein the most recent acknowledgement message is transmitted and at least one older acknowledgement message is dropped when a plurality of acknowledgement messages are buffered,
wherein the first wireless transmitter (308) and the second wireless transmitter (310) transmit concurrently.

7. The method according to claim 6, wherein the bi-directional network transmission protocol comprises a transmission control protocol, TCP, the data transmitted in the downlink includes TCP DATA packets, and the acknowledgement messages transmitted in the uplink include TCP ACK packets.

## Patentansprüche

1. Vorrichtung (302) zum Übertragen von Daten, die in einem bidirektionalen Netzwerkübertragungsprotokoll gekapselt sind, über ein verteiltes drahtloses Netzwerk (314), wobei die Vorrichtung (302) Folgendes umfasst:
einen Prozessor (304), einen ersten drahtlosen Transmitter (308) und einen zweiten drahtlosen Transmitter (310), wobei der Prozessor (304) konfiguriert ist zum:
Leiten der in dem bidirektionalen Netzwerkübertragungsprotokoll gekapselten Daten zur Übertragung durch den ersten drahtlosen Transmitter (308) bei einer ersten Frequenz; und
Leiten von Bestätigungsnachrichten des bidirektionalen Netzwerkübertragungsprotokolls, die als Reaktion auf den Empfang der Daten generiert werden, zur Übertragung durch den zweiten drahtlosen Transmitter (310) bei einer zweiten Frequenz,
wobei die in dem bidirektionalen Netzwerkübertragungsprotokoll gekapselten Daten durch jeden drahtlosen Repeater (302) übertragen werden, der einen drahtlosen Kanal zwischen einem Client-Terminal (318) und einem Netzwerkzugangspunkt (316) implementiert, und die Bestätigungsnachrichten direkt zwischen dem Client-Terminal (318) und dem Netzwerkzugangspunkt (316) übertragen werden,
wobei der Prozessor (304) konfiguriert ist, um die neueste Bestätigungsnachricht zu übertragen und mindestens eine ältere Bestätigungsnachricht zu löschen, wenn eine Vielzahl von Bestätigungsnachrichten gepuffert werden,
wobei der erste drahtlose Transmitter (308) und der zweite drahtlose Transmitter (310) gleichzeitig übertragen.

2. Vorrichtung (302) nach einem der vorstehenden Ansprüche, wobei das verteilte drahtlose Netzwerk (314) auf dem IEEE 802.11-Standard basiert.

3. Vorrichtung (302) nach einem der vorstehenden Ansprüche, wobei das bidirektionale Netzwerkübertragungsprotokoll ein Übertragungssteuerungsprotokoll (transmission control protocol, TCP) umfasst, die in dem Downlink übertragenen Daten TCP-DATA-Pakete einschließen und die in dem Uplink übertragenen Bestätigungsnachrichten TCP-ACK-Pakete einschließen.

4. Vorrichtung (302) nach einem der vorstehenden Ansprüche, wobei die erste Frequenz auf dem 5-Gigahertz(GHz)-Band-Funkkanal basiert und die zweite Frequenz auf dem 2,4-GHz-Band-Funkkanal basiert.

5. Vorrichtung (302) nach einem der vorstehenden Ansprüche, wobei der Prozessor (304) ferner konfiguriert ist, um von einem externen Netzwerk (320) empfangene und in dem bidirektionalen Netzwerkübertragungsprotokoll gekapselte Daten an ein erstes virtuelles lokales Netzwerk (virtual local area network, VLAN) weiterzuleiten, und um die durch den zweite drahtlosen Transmitter (310) übertragenen Bestätigungsnachrichten aus einem zweiten VLAN zu extrahieren und die extrahierten Bestätigungsnachrichten an das externe Netzwerk (320) weiterzuleiten.

6. Verfahren zum Übertragen von Daten, die in einem bidirektionalen Netzwerkübertragungsprotokoll gekapselt sind, über ein verteiltes drahtloses Netzwerk, wobei das Verfahren durch eine Vorrichtung (302) durchgeführt wird, die einen Prozessor (304) und einen ersten drahtlosen Transmitter (308) sowie einen zweiten drahtlosen Transmitter (310) umfasst, und wobei das Verfahren Folgendes umfasst:
Leiten der in dem bidirektionalen Netzwerkübertragungsprotokoll gekapselten Daten zur Übertragung durch den ersten drahtlosen Transmitter (308) bei einer ersten Frequenz (404); und
Leiten von Bestätigungsnachrichten des bidirektionalen Netzwerkübertragungsprotokolls, die als Reaktion auf den Empfang der Daten (406) generiert werden, zur Übertragung durch den zweiten drahtlosen Transmitter (310) bei einer zweiten Frequenz, wobei die in dem bidirektionalen Netzwerkübertragungsprotokoll gekapselten Daten durch jeden drahtlosen Repeater (302) übertragen werden, der einen drahtlosen Kanal zwischen einem Client-Terminal (318) und einem Netzwerkzugangspunkt (316) implementiert, und die Bestätigungsnachrichten direkt zwischen dem Client-Terminal (318) und dem Netzwerkzugangspunkt (316) übertragen werden,
wobei die neueste Bestätigungsnachricht übertragen wird und mindestens eine ältere Bestätigungsnachricht gelöscht wird, wenn eine Vielzahl von Bestätigungsnachrichten gepuffert wird,
wobei der erste drahtlose Transmitter (308) und der zweite drahtlose Transmitter (310) gleichzeitig übertragen.

7. Verfahren nach Anspruch 6, wobei das bidirektionale Netzwerkübertragungsprotokoll ein Übertragungssteuerungsprotokoll (TCP) umfasst, die in dem Downlink übertragenen Daten TCP-DATA-Pakete einschließen und die in dem Uplink übertragenen Bestätigungsnachrichten TCP-ACK-Pakete einschließen.

## Revendications

1. Appareil (302) pour une transmission de données encapsulées dans un protocole de transmission de réseau bidirectionnel sur un réseau sans fil distribué (314), l'appareil (302) comprenant un processeur (304), un premier émetteur sans fil (308) et un second émetteur sans fil (310), dans lequel
le processeur (304) est configuré pour :
diriger les données encapsulées dans le protocole de transmission de réseau bidirectionnel pour une transmission par le premier émetteur sans fil (308) à une première fréquence ; et
diriger des messages d'accusé de réception du protocole de transmission de réseau bidirectionnel générés en réponse à la réception des données, pour une transmission par le second émetteur sans fil (310) à une seconde fréquence,
dans lequel les données encapsulées dans le protocole de transmission de réseau bidirectionnel sont transmises par chaque répéteur sans fil (302) mettant en œuvre un canal sans fil entre un terminal client (318) et un point d'accès réseau (316), et les messages d'accusé de réception sont transmis directement entre le terminal client (318) et le point d'accès au réseau (316),
dans lequel le processeur (304) est configuré pour transmettre le message d'accusé de réception le plus récent et supprimer au moins un message d'accusé de réception plus ancien lorsqu'une pluralité de messages d'accusé de réception sont mis en mémoire tampon,
dans lequel le premier émetteur sans fil (308) et le second émetteur sans fil (310) transmettent simultanément.

2. Appareil (302) selon l'une quelconque des revendications précédentes, dans lequel le réseau sans fil distribué (314) est basé sur la norme IEEE 802.11.

3. Appareil (302) selon l'une quelconque des revendications précédentes, dans lequel le protocole de transmission de réseau bidirectionnel comprend un protocole de commande de transmission, TCP, les données transmises dans la liaison descendante comportent des paquets TCP DATA, et les messages d'accusé de réception transmis dans la liaison montante comportent des paquets TCP ACK.

4. Appareil (302) selon l'une quelconque des revendications précédentes, dans lequel la première fréquence est basée sur le canal radio de bande de 5 Gigahertz, GHz, et la seconde fréquence est basée sur le canal radio de bande de 2,4 GHz.

5. Appareil (302) selon l'une quelconque des revendications précédentes, dans lequel le processeur (304) est en outre configuré pour acheminer des données reçues d'un réseau externe (320) et encapsulées dans le protocole de transmission de réseau bidirectionnel vers un premier réseau local virtuel VLAN, et pour extraire les messages d'accusé de réception transmis par le second émetteur sans fil (310) à partir d'un second VLAN et acheminer les messages d'accusé de réception extraits vers le réseau externe (320).

6. Procédé de transmission de données encapsulées dans un protocole de transmission de réseau bidirectionnel sur un réseau sans fil distribué, dans lequel le procédé est exécuté par un appareil (302) comprenant un processeur (304), un premier émetteur sans fil (308) ainsi qu'un second émetteur sans fil (310) et dans lequel le procédé comprend :
la direction des données encapsulées dans le protocole de transmission de réseau bidirectionnel pour une transmission par le premier émetteur sans fil (308) à une première fréquence (404) ; et
la direction des messages d'accusé de réception du protocole de transmission de réseau bidirectionnel générés en réponse à la réception des données (406), pour une transmission par le second émetteur sans fil (310) à une seconde fréquence,
dans lequel les données encapsulées dans le protocole de transmission de réseau bidirectionnel sont transmises par chaque répéteur sans fil (302) mettant en œuvre un canal sans fil entre un terminal client (318) et un point d'accès réseau (316), et les messages d'accusé de réception sont transmis directement entre le terminal client (318) et le point d'accès au réseau (316),
dans lequel le message d'accusé de réception le plus récent est transmis et au moins un message d'accusé de réception plus ancien est supprimé lorsqu'une pluralité de messages d'accusé de réception sont mis en mémoire tampon,
dans lequel le premier émetteur sans fil (308) et le second émetteur sans fil (310) transmettent simultanément.

7. Procédé selon la revendication 6, dans lequel le protocole de transmission de réseau bidirectionnel comprend un protocole de commande de transmission, TCP, les données transmises dans la liaison descendante comportent des paquets TCP DATA, et les messages d'accusé de réception transmis dans la liaison montante comportent des paquets TCP ACK.
